(19) Europäisches Patentamt
European Patent Office
Office européen des brevets

(11) **EP 4 607 098 A1**

(12) **EUROPÄISCHE PATENTANMELDUNG**

(43) Veröffentlichungstag:
**27.08.2025   Patentblatt 2025/35**

(21) Anmeldenummer: **25154995.2**

(22) Anmeldetag: **30.01.2025**

(51) Internationale Patentklassifikation (IPC):
**F24D 19/10** (2006.01)   **F24H 15/128** (2022.01)
**F24H 15/254** (2022.01)   **F24H 15/31** (2022.01)
**F24H 15/414** (2022.01)   **F24H 15/421** (2022.01)
**F24H 15/443** (2022.01)   **G05D 23/19** (2006.01)

(52) Gemeinsame Patentklassifikation (CPC):
**F24D 19/1015; F24D 19/1018; F24H 15/128;**
**F24H 15/254; F24H 15/31; F24H 15/414;**
**F24H 15/421; F24H 15/443; G05D 23/1934;**
F24D 2220/0264

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität:  **23.02.2024  DE 102024201670**

(71) Anmelder: **Robert Bosch GmbH**
**70442 Stuttgart (DE)**

(72) Erfinder:
• **Gauger, Stephan**
  **72587 Roemerstein (DE)**
• **Holtz, Gerald**
  **70174 Stuttgart (DE)**

(54) **VERFAHREN ZUM BETRIEB EINES HEIZUNGSSYSTEMS**

(57)     Die Erfindung betrifft ein Verfahren (100) zum Betrieb eines Heizungssystems (1) zum Beheizen von mindestens einem Raum (10, 10a), wobei Wärme, insbesondere mittels einer Wärmeerzeugereinheit (3), zentral bereitgestellt wird und mittels eines fluiden Wärmeträgers, insbesondere Wasser, verteilt wird, wobei die Wärmezufuhr zu einem ersten Raum (10) von zumindest einem ersten Raumregler (15) mittels mindestens einer ersten Ventil-Sollposition an mindestens ein Heizungsventil (16, 16a) vorgegeben wird, wobei das Verfahren (100) die folgenden Schritte umfasst:
• Ermitteln (110) einer ersten zentralen Ventil-Sollposition,
• Ermitteln (120) einer ersten lokalen Ventil-Sollposition durch den ersten Raumregler,
• Bereitstellen (126) der ermittelten ersten lokalen Ventil-Sollposition, insbesondere durch den ersten Raumregler (15), und/oder der ermittelten ersten zentralen Ventil-Sollposition,
• Vergleichen (130) der ermittelten ersten zentralen Ventil-Sollposition mit der ermittelten ersten lokalen Ventil-Sollposition, wobei bei einer Abweichung größer oder gleich einem definierten Wert die erste Ventil-Sollposition in Abhängigkeit von der Abweichung und/oder einer ermittelten, insbesondere der ersten, zentralen Ventil-Sollposition verändert wird (140).

Fig. 2

**Beschreibung**

Die Erfindung betrifft ein Verfahren zum Betrieb eines Heizungssystems zum Beheizen von Räumen, eine Zentralsteuerung eines Heizungssystems und ein Heizungssystem.

Stand der Technik

Es sind Heizungssysteme mit einem Wärmeerzeugereinheit bekannt, wobei die Wärmeerzeugereinheit Wärme zentral bereitstellt und mittels eines fluiden Wärmeträgers auf die zu beheizenden Räume verteilt. Ferner weisen die bekannten Heizungssystem Raumregler auf. Die Raumregler regeln jeweils die Wärmezufuhr in einen Raum mittels eines Heizungsventils. Die Regelung bei den Raumreglern erfolgt in Abhängigkeit von einer gemessenen Raum-Isttemperatur und einer vorgegebenen Raum-Solltemperatur für den jeweiligen Raum. Die Raumregler verwenden zur Regelung die gemessene Raum-Isttemperatur und die vorgegebene Raum-Solltemperatur, um die Ventil-Sollposition für den Raum zu bestimmen. Wird die Raum-Solltemperatur geändert, insbesondere um 2K erhöht, so wird die Ventil-Sollposition oftmals nur langsam angepasst, um ein Überschwingen der gemessenen Raumtemperatur zu vermeiden. Die bekannten Raumregler sind auf zu hoch eingestellte Vorlauftemperaturen optimiert und daher oftmals nur teilweise geöffnet, beispielsweise 30%. Dies hat zur Folge, dass zur Erreichung des Komforts mit unnötig hohen Vorlauftemperaturen gearbeitet wird.

Offenbarung der Erfindung

Die Aufgabe des erfindungsgemäßen Verfahrens, der erfindungsgemäßen Zentralsteuerung und dem erfindungsgemäßen Heizungssystem besteht darin das Heizungssystem derart zu steuern und/oder zu regeln, dass die Nachteile der bekannten Systeme nicht auftreten, und insbesondere die Vorlauftemperatur reduziert bzw. für die Wärmeerzeugereinheit optimiert werden kann.

Das Reduzieren der Vorlauftemperatur bewirkt insbesondere bei Heizungssystemen mit einer Wärmeerzeugereinheit, welche als Wärmepumpe ausgeführt ist, ein Reduzieren der Energieverbrauchs. Ist die Wärmeerzeugereinheit als Brennwertgerät ausgeführt, kann so die Rücklauftemperatur unter der Kondensationstemperatur des Abgases gehalten werden.

Das erfindungsgemäße Verfahren dient zum Berteiben eines Heizungssystems. Das Heizungssystem dient zum Beheizen von mindestens einem Raum n, insbesondere einem ersten Raum (n=1). Das Heizungssystem ist nicht auf das Beheizen von einem einzigen Raum begrenzt. Das Heizungssystem kann einen zweiten Raum (n=2) und eine beliebige Anzahl weiterer Räume beheizen. Das Heizungssystem kann ausgebildet sein ein Gebäude oder weitere Gebäude zu beheizen. Vorzugsweise wird es eingesetzt, um die Räume eines Gebäudes oder eines Teils eines Gebäudes zu beheizen. Unter einem Raum wird hier insbesondere auch ein Teil oder ein Bereich eines Gebäudes verstanden. Bei einem Gebäude kann es sich um ein Wohngebäude, eine Gewerbegebäude oder ein Industriegebäude handeln.

Das Heizungssystem weist mindestens einen Wärmeerzeugereinheit auf. Unter einer "Wärmeerzeugereinheit" soll in diesem Zusammenhang insbesondere eine Einheit verstanden werden, welche dazu vorgesehen ist, insbesondere unter Verwendung zumindest eines Energieträgers und/oder durch eine insbesondere chemische Reaktion und/oder durch Solarthermie, thermische Energie, insbesondere Wärme, zu erzeugen und/oder nutzbar zu machen. Vorzugsweise ist die Wärmeerzeugereinheit dazu vorgesehen, einen fluiden Wärmeträger, vorzugsweise Wasser, zu erhitzen. Beispiele für Wärmerzeugungseinheiten sind Brennwertgeräte, Ölbrenner, Solaranlagen, Wärmepumpen, Brennstoffzellenheizungen, Pelletofen oder Klimagerät. Die Wärme wird mittels einer Wärmeerzeugereinheit zentral bereitgestellt.

Mittels einer Pumpeneinheit und einem Heizkreis wird der erhitzte oder erwärmte Wärmeträger in die zu beheizenden Räume gepumpt. Unter einer "Pumpeneinheit" soll in diesem Zusammenhang insbesondere eine Einheit, vorzugsweise eine Strömungspumpeneinheit und besonders vorteilhaft eine Kreiselpumpeneinheit, verstanden werden, welche dazu vorgesehen ist, einen Wärmeträger, insbesondere zumindest ein, vorzugsweise zumindest im Wesentlichen inkompressibles, Fluid, vorzugsweise Wasser, zu fördern. Vorzugsweise ist die Pumpeneinheit in dem Heizkreis, welcher insbesondere als ein Rohrleitungssystem ausgebildet, an einer zentralen Stelle angeordnet. Darunter, dass die zumindest eine Pumpeneinheit in dem Heizkreis an einer "zentralen Stelle" angeordnet ist, soll in diesem Zusammenhang insbesondere verstanden werden, dass die zumindest eine Pumpeneinheit zumindest teilweise derart in dem zumindest einen Heizkreis eingebracht und/oder angebracht ist, dass die zumindest eine Pumpeneinheit in zumindest einem Betriebszustand zumindest den Wärmeträger durch den gesamte Heizkreis fördern kann.

Vorzugsweise weisen die zu beheizenden Räume zumindest ein Heizungsventil und einen Wärmeübertrager auf. Es können auch mehrere Heizungsventile und/oder Wärmeübertrager in einem Raum ausgebildet sein. Der Wärmeübertrager gibt die Wärme, welche mit dem Wärmeträger transportiert wird, an die Umgebung ab. Hierdurch erwärmt sich insbesondere die Umgebungsluft. Unter einem Wärmeüberträger wird eine Einheit oder ein Körper, wie beispielsweise ein Gerät oder eine vergleichbare Vorrichtung, verstanden, welche thermische Energie an ein Medium, wie Gegenstände, Flüssigkeiten oder Gase, abgeben kann. Beispiele sind ein Radiator, eine Fußbodenheizung, eine Inneneinheit einer Klimaanlage und dergleichen.

Vorzugsweise befindet sich im Vorlauf, insbesondere stromaufwärts, eines Wärmeüberträgers zumindest ein Heizungsventil. Vorzugsweise ist der Durchfluss durch den oder die Wärmeüberträger über zumindest ein Heizungsventil steuerbar, insbesondere regelbar. Vorzugsweise ist das Heizungsventil im Vorlauf oder im Nachlauf, insbesondere stromabwärts, des Wärmeüberträgers angeordnet. Insbesondere kann ein Heizungsventil auch mehreren Wärmeüberträger vor- oder nachgeschalten sein und den Durchfluss des Wärmeträgers steuern, insbesondere regeln. Das Heizungsventil steuert den Durchfluss des Wärmeträgers, welches in der Wärmeerzeugereinheit erwärmt wird, zu mindestens einem der Wärmeüberträger.

Insbesondere weist jedes Heizungsventil ein Ventilmittel, dessen Ventilstellung geändert werden kann auf. Die Ventilstellung wird in Abhängigkeit von einer vorgegebenen oder bereitgestellten Ventil-Sollposition geändert. Die vorgegebene oder bereitgestellte Ventil-Sollposition wird auch als hinterlegte Ventil-Sollposition oder nur als Ventil-Sollposition bezeichnet. Sie wird dem Heizungsventil vorgegeben oder bereitgestellt. Die hinterlegte Ventil-Sollposition kann auch als dem Heizungsventil, insbesondere tatsächlich, bereitgestellte oder vorgegeben Ventil-Sollposition bezeichnet werden.

Mit der Ventilstellung des Heizungsventils wird dessen Position bezeichnet. Abhängig von der Ventilstellung wird eine Durchflussöffnung und damit der Durchfluss eines Wärmeträgers durch das Heizungsventils gesteuert. Insbesondere wird abhängig von der Ventilstellung das Maß der Durchflussöffnung verändert, insbesondere verkleinert oder vergrößert. Mit Durchflussöffnung wird eine Öffnung einer Leitung, insbesondere die Gesamtfläche der Öffnung, und/oder eine Öffnung eines Heizungsventils bezeichnet, durch welches der Wärmeträger treten kann. Vorzugsweise erfolgt das Ändern der Ventilstellung mittels eines Magnetantriebs oder eines elektrisch angetriebenen Motors oder eines Stellantriebs, insbesondere eines thermischen Stellantriebs. Je nach Ventilstellung wird die Durchflussöffnung des Heizungsventils zwischen einem Minimum und einem Maximum variiert.

Das Heizungsventil ändert seine Ventilstellung in Abhängigkeit von einer vorgegebenen und/oder bereitgestellten Ventil-Sollposition, die auch nur als Ventil-Sollposition bezeichnet wird. Die Ventil-Sollposition wird insbesondere als relativer Wert vorgegeben, insbesondere als Prozentwert. Sie kann aber auch als Absolutwert vorgegeben werden.

Ferner sind Raumregler vorgesehen, welche ausgebildet und eingerichtet sind, eines, mehrere oder alle Heizungsventile eines Raums n anzusteuern. Vorzugsweise ist je Raum ein Raumregler ausgebildet. Die Raumregler weisen vorzugsweise ein Bedienelement und ein Anzeigemittel, insbesondere ein Display auf. Sie ermöglichen das Einstellen einer Soll-Raumtemperatur. Vorzugsweise ist jedem Raum n mindestens ein Raumregler zugeordnet. Damit die Raumregler die Heizungsventile steuern können, besteht zwischen einem Raumregler und einem Heizungsventilen eine Kommunikationsverbindung. Diese kann drahtlos oder drahtgebunden ausgebildet sein. Insbesondere ist ein erster Raumregler für einen ersten Raum (n=1) vorgesehen.

Gemäß einer vorteilhaften Weiterbildung ist der Raumregler in das Heizungsventil oder umgekehrt integriert. Insbesondere weist das Heizungsventil beispielsweise ein Anzeigemittel und ein Bedienelement auf. Gemäß einer vorteilhaften Weiterbildung ist es möglich mittels eines Raumreglers eine Raum-Solltemperatur für einen oder mehrere Räume n einzustellen.

Vorzugsweise ist ein Temperatursensor zur Erfassung der Raumtemperatur, insbesondere der Raum-Isttemperatur in einem Raum n ausgebildet. Die Raum-Isttemperatur wird insbesondere für die Ausführung des Verfahrens benötigt. Der Temperatursensor wird für die Erfassung der aktuellen Temperatur in dem Raum, der geregelt werden soll, insbesondere die Raum-Isttemperatur, in einem Raum n benötigt. Der Temperatursensor stellt die erfasste Temperatur zur Verfügung. Insbesondere weisen die Raumregler den Temperatursensor auf. Vorzugsweise sind die Raumregler ausgebildet die mittels dem Temperatursensor erfasste Raum-Isttemperatur und/oder die Raum-Solltemperatur bereitzustellen oder zu versenden.

Das erfindungsgemäße Verfahren umfasst die folgenden Verfahrensschritte.

In einem Verfahrensschritt erfolgt das Ermitteln einer ersten zentralen Ventil-Sollposition für den ersten Raumregler und/oder ersten Raum n=1. Insbesondere erfolgt das Ermitteln einer zentralen Ventil-Sollposition für einen ersten Raum n. Vorzugsweise erfolgt das Ermitteln durch die Zentralsteuerung. Alternativ kann die Ermittlung auch durch einen der Raumregler, insbesondere den ersten Raumregler, erfolgen. Insbesondere erfolgt das Ermitteln einer zentralen Ventil-Sollposition für jeden Raum.

In einem Verfahrensschritt erfolgt das Ermitteln einer ersten lokalen Ventil-Sollposition, insbesondere durch den ersten Raumregler, insbesondere für einen ersten Raumregler und/oder ersten Raum. Insbesondere erfolgt das Ermitteln einer lokalen Ventil-Sollposition für einen Raum.

In einem Verfahrensschritt erfolgt das Bereitstellen der ermittelten ersten lokalen Ventil-Sollposition, insbesondere durch den ersten Raumregler. Alternativ oder zusätzlich wird die ermittelte erste zentrale Ventil-Sollposition bereitgestellt. Das Bereitstellen umfasst ein Senden, aber auch zum Abruf zur Verfügung stellen.

In einem Verfahrensschritt erfolgt das Vergleichen der ermittelten ersten zentralen Ventil-Sollposition mit der ermittelten ersten lokalen Ventil-Sollposition, wobei bei einer Abweichung größer oder gleich einem definierten Wert die erste Ventil-Sollposition, die insbesondere hinterlegt ist, in Abhängigkeit von der Abweichung und/oder einer ermittelten, insbesondere der ersten, zentralen Ventil-Sollposition verändert wird.

Vorzugweise wird die ermittelte zentrale Ventil-Sollposition und die ermittelte lokale Ventil-Sollposition, die beide für den gleichen Raum ermittelt wurden, miteinander verglichen. Die Ventil-Sollposition wird dann in Abhängigkeit von dem Vergleich ermittelt.

Vorzugsweise wird die Ventil-Sollposition in Abhängigkeit von der lokalen Ventil-Sollposition ermittelt, insbesondere bestimmt, vorzugsweise übernommen. Wird eine Abweichung größer einem definierten Wert ermittelt, kommt es zu einem Verändern der Ventil-Sollposition in Abhängigkeit von der Abweichung und/oder einer ermittelten, insbesondere der ersten, zentralen Ventil-Sollposition. Das Ändern erfolgt insbesondere mittels Aufprägens und/oder einem Steuersignal und/oder eine Vorgabe. Gemäß einer vorteilhaften Weiterbildung wird die Vorgabe mittels dem Steuersignal bereitgestellt.

Durch die in den Unteransprüchen aufgeführten Maßnahmen ergeben sich vorteilhafte Weiterbildungen und Verbesserungen der im Hauptanspruch angegebenen Merkmale.

Eine vorteilhafte Weiterbildung des Verfahrens zeichnet sich dadurch aus, dass die Wärmezufuhr zu einem zweiten Raum (n=2) von zumindest einem zweiten Raumregler mittels einer zweiten Ventil-Sollposition vorgegeben wird. Vorzugsweise ist der zweite Raumregler in dem zweiten Raum angeordnet oder diesem zugeordnet.

Die Weiterbildung umfasst die folgenden Verfahrensschritte:

In einem Verfahrensschritt erfolgt das Ermitteln einer zweiten zentralen Ventil-Sollposition für den zweiten Raumregler und/oder für den zweiten Raum, insbesondere durch die Zentralsteuerung. Alternativ erfolgt das Ermitteln durch den gleichen Raumregler, der auch die erste zentrale Ventil-Sollposition ermittelt.

In einem Verfahrensschritt erfolgt das Ermitteln einer zweiten lokalen Ventil-Sollposition, insbesondere durch den zweiten Raumregler, insbesondere für den zweiten Raum und/oder den zweiten Raumregler.

In einem Verfahrensschritt erfolgt das Bereitstellen der ermittelten zweiten lokalen Ventil-Sollposition, insbesondere durch den zweiten Raumregler, für einen zweiten Raum und/oder zweiten Raumregler. Alternativ oder zusätzlich wird die ermittelte zweite zentrale Ventil-Sollposition bereitgestellt.

In einem Verfahrensschritt erfolgt das Vergleichen der ermittelten zweiten zentralen Ventil-Sollposition mit der ermittelten zweiten lokalen Ventil-Sollposition, wobei bei einer Abweichung größer oder gleich einem definierten Wert die zweite hinterlegte Ventil-Sollposition in Abhängigkeit von der Abweichung und/oder einer der ermittelten, insbesondere der zweiten, zentralen Ventil-Sollposition verändert wird.

Eine vorteilhafte Weiterbildung des Verfahrens zeichnet sich dadurch aus, dass die Wärmezufuhr zu einem n-ten Raum (n) von zumindest einem n-ten Raumregler mittels einer n-ten Ventil-Sollposition vorgegeben wird. Vorzugsweise ist der n-te Raumregler in dem n-ten Raum angeordnet oder diesem zugeordnet.

In einem Verfahrensschritt erfolgt das Ermitteln einer n-ten lokalen Ventil-Sollposition, insbesondere durch den n-ten Raumregler, insbesondere für den n-ten Raum und/oder den n-ten Raumregler.

In einem Verfahrensschritt erfolgt das Bereitstellen der ermittelten n-ten lokalen Ventil-Sollposition, insbesondere durch den n-ten Raumregler, für einen n-ten Raum und/oder n-ten Raumregler. Alternativ oder zusätzlich wird die ermittelte n-te zentrale Ventil-Sollposition bereitgestellt.

In einem Verfahrensschritt erfolgt das Vergleichen der ermittelten n-ten zentralen Ventil-Sollposition mit der ermittelten n-ten lokalen Ventil-Sollposition, wobei bei einer Abweichung größer oder gleich einem definierten Wert die n-te hinterlegte Ventil-Sollposition in Abhängigkeit von der Abweichung und/oder einer der ermittelten, insbesondere der n-ten, zentralen Ventil-Sollposition verändert wird.

Eine vorteilhafte Weiterbildung ist, dass bei der Inbetriebnahme oder im Fehlerfall die ermittelte lokale Ventil-Sollposition als Ventil-Sollposition hinterlegt wird. Die Ventil-Sollposition entspricht somit zumindest kurzzeitig der ermittelten lokalen Ventil-Sollposition. Auch wird bei einer Abweichung kleiner als der definierte Wert die zentrale Ventil-Sollposition von der ermittelten lokalen Ventil-Sollposition übernommen.

Vorzugsweise wird bei der Inbetriebnahme oder im Fehlerfall die erste ermittelte lokale Ventil-Sollposition als erste Ventil-Sollposition hinterlegt. Vorzugsweise wird bei der Inbetriebnahme oder im Fehlerfall die zweite ermittelte lokale Ventil-Sollposition als zweite Ventil-Sollposition hinterlegt. Vorzugsweise wird bei der Inbetriebnahme oder im Fehlerfall die n-te ermittelte lokale Ventil-Sollposition als n-te Ventil-Sollposition hinterlegt.

Eine Weiterbildung der Erfindung ist, dass das Verändern der n-ten, insbesondere ersten oder zweiten, Ventil-Sollpositionen zusätzlich in Abhängigkeit von zumindest einer weiteren ermittelte Abweichung, insbesondere der ermittelten Abweichung eines oder mehrerer weiterer Räume, durchgeführt wird. Hierdurch kann eine Art dynamischer hydraulischer Abgleich erreicht werden. Insbesondere kann so die maximale Ventil-Sollposition begrenzt werden.

Gemäß einer vorteilhaften Weiterbildung werden zumindest eine, insbesondere alle, lokalen Ventil-Sollpositionen in Abhängigkeit einer ermittelten Raum-Solltemperatur und einer ermittelten Raum-Isttemperatur ermittelt, wobei insbesondere die Temperaturen, vorzugsweise die Raum-Soll- und die Raum-Isttemperatur, in dem mit der Ventil-Sollposition zu steuerndem Raum verwendet werden. Die erste lokale Ventil-Sollposition wird in Abhängigkeit von der Raum-Isttemperatur und der Raum-Solltemperatur des ersten Raums ermittelt. Die zweite lokale Ventil-Sollposition wird in Abhängigkeit von der Raum-Isttemperatur und der Raum-Solltemperatur des zweiten Raums ermittelt. Die n-te lokale Ventil-Sollposition wird in Abhängigkeit von der Raum-Isttemperatur und der Raum-Solltemperatur des n-ten Raums ermittelt. Die lokale Ventil-Sollposition dient zur Steuerung der Erwärmung eines Raums. Zur Ermittlung wird die Raum-Isttemperatur und der Raum-Solltemperatur des zu steuernden Raums verwendet.

Das Ermitteln einer Raum-Isttemperatur erfolgt insbesondere mittels Erfassens mittels eines Temperatursensors der Temperatur der Luft in dem Raum, insbesondere der Raumtemperatur. Der Temperatursensor ist insbesondere in dem Raum angeordnet und/oder ist Teil des Raumreglers. Das Ermitteln muss nicht zwangsläufig ein Messen umfassen. Die Raum-Isttemperatur kann auch mittels Berechnens, insbesondere mittels eines Modells, Empfangens oder Abrufen ermittelt werden.

Die Raum-Solltemperatur ist die von einem Benutzer gewünschte Temperatur. Die Raum-Solltemperatur kann insbesondere mittels eines oder an dem Raumregler durch einen Benutzer eingestellt werden. Gemäß einer Weiterbildung weist der Raumregler hierzu Eingabemittel und/oder ein Anzeigemittel auf. Die Raum-Solltemperatur kann auch mittels Empfangens oder Abrufens ermittelt werden.

Eine vorteilhafte Weiterbildung der Erfindung ist, dass die Zentralsteuerung und die Raumregler miteinander kommunizieren können, und dass die zentrale Ventil-Sollpositionen von der Zentralsteuerung oder einem Raumregler bereitgestellt wird und/oder dass die Vergleiche durch die Zentralsteuerung und/oder einen der Raumregler durchgeführt wird, und dass die Veränderung der Ventil-Sollpositionen mittels einem Steuersignal, insbesondere einer Vorgabe, vorzugsweise ein Aufprägen. erfolgt. Vorzugsweise wird das Steuersignal und/oder die Vorgabe von der Zentralsteuerung bereitgestellt, insbesondere erzeugt und gesendet.

Eine vorteilhafte Weiterbildung ist, dass zumindest einer, insbesondere der erste und/oder der zweite, vorzugsweise alle, Raumregler einen P-Regler, I-Regler, PD-Regler, PID-Regler oder PI-Regler zur Ermittlung der Ventil-Sollposition aufweist.

Als vorteilhafte Weiterbildung hat sich herausgestellt, dass das Ändern der Ventil-Sollposition durch Ändern, insbesondere durch eine Vorgabe einer Änderung, des proportional Anteils und/oder des integralen Anteils und/oder des differenzialen Anteils erfolgt, und dass insbesondere des proportionalen Anteils und/oder des integralen Anteils und/oder des differenzialen Anteils und/oder eines Offsets erfolgt. Das Ändern wiederum erfolgt insbesondere in Abhängigkeit von dem Ergebnis des Vergleichens.

Eine vorteilhafte Weiterbildung ist, dass die erste und/oder zweite und/oder n-te zentrale Ventil-Sollpositionen mittels der Außentemperatur und/oder der Vorlauf-Isttemperatur und/oder der Vorlauf-Solltemperatur und/oder der Raum-Isttemperatur und/oder der Ventil-Sollposition und/oder einem zuvor ermittelten Parameter ermittelt wird. Vorzugsweise erfolgt das Ermitteln der Ermitteln der n-ten zentrale Ventil-Sollpositionen mittels der Außentemperatur und/oder der Vorlauf-Isttemperatur und/oder der Vorlauf-Solltemperatur und/oder der n-ten Raum-Isttemperatur und/oder der n-ten Ventil-Sollposition und/oder einem zuvor ermittelten Parameter.

Ferner betrifft die Erfindung eine Zentralsteuerung, welche ausgebildet ist das erfindungsgemäße Verfahren zumindest teilweise auszuführen, und wobei die Zentralsteuerung ein Kommunikationsmittel aufweist, welches eingerichtet und ausgebildet ist, mit den Raumreglern und dem Wärmeerzeugereinheit zu kommunizieren.

Ferner betrifft die Erfindung ein Heizungssystem mit einer erfindungsgemäßen Zentralsteuerung, mit einem Wärmeerzeugereinheit, mit mindestens einem Raumregler, der mindestens ein Heizungsventil steuert.

Die Kommunikation zwischen Zentralsteuerung und Raumregler und Raumregler und Heizungsventil läuft insbesondere mittels einer Kommunikationsverbindung ab. Ein Kommunikationsverbindung umfasst hierbei auch eine Steuerleitung. Die Kommunikation läuft insbesondere drahtgebunden, insbesondere mittels eines Bussystems, Modbus, Powerline, M-Bus, Ethernet, EIB, CAN, KNX, EMS, OpenTherm oder drahtlos, vorzugsweise Bluetooth, NFC, RFID, ANT+, Dash7, GPRS, EDGE, UMTS, 5G, LTE, WIMAX, Zigbee, Thread, Matter, Z-Wave, 868 MHz oder WIFI ab.

Ausführungsbeispiele sind in den Figuren dargestellt und in der nachfolgenden Beschreibung näher erläutert. Es zeigen:

Figur 1     einen schematischen Aufbau eines Heizungssystems,

Figur 2     ein erfindungsgemäßes Verfahren 100 und

Figur 3     einen Ausschnitt des erfindungsgemäßen Verfahrens zur Bestimmung der Ventil-Sollposition des zweiten Heizungsventils.

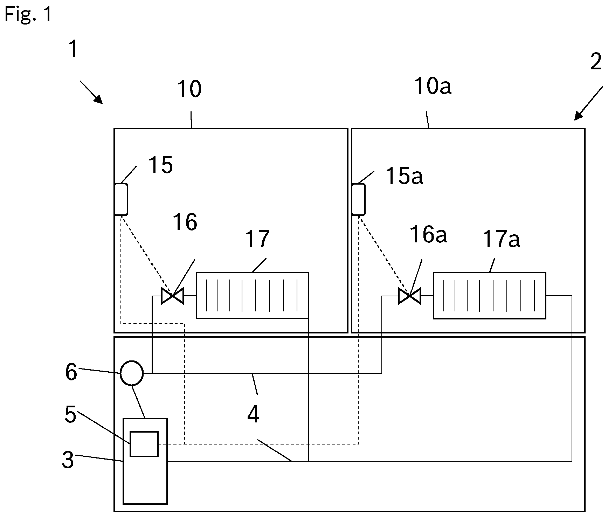

In Figur 1 ist schematisch ein Gebäude 2 mit einem Heizungssystem 1 zu sehen.

Das Gebäude 2 weist beispielhaft ein Kellergeschoss und ein Erdgeschoss auf. In dem Erdgeschoss sind beispielhaft ein erster Raum 10 und ein zweiter Raum 10a ausgebildet. Im Kellergeschoss ist eine Wärmeerzeugereinheit 3 ausgebildet.

Weiterhin ist eine Zentralsteuerung 5 ausgebildet. Die Zentralsteuerung 5 steuert unteranderem die Wärmeerzeugereinheit 3 insbesondere mittels eines oder mehrere Steuersignale, welche sie bereitstellt. Gemäß einer Weiterbildung kommuniziert die Zentralsteuerung 5 mit einer Wärmeerzeugersteuerung, welche die Wärmeerzeugereinheit 3 ansteuert. Vorzugsweise werden zumindest Teilschritte des erfindungsgemäßen Verfahrens 100 auf der Zentralsteuerung 5 ausgeführt. Die Zentralsteuerung 5 weist einen maschinenlesbaren Speicher für das Speichern des Verfahrens 100 auf.

In jedem Raum 10, 10a ist beispielhaft zumindest ein Wärmeübertrager 17, 17a ausgebildet. Im Vorlauf des Wärmeübertrager 17, 17a ist ein Heizungsventil 16, 16a ausgebildet. Alternativ kann das Heizungsventil auch im Nachlauf ausgebildet sein. Der Wärmeübertrager 17, 17a ist insbesondere eine Fußbodenheizung oder ein Heizkörper. Ferner ist für jeden Raum 10, 10a ein Raumregler 15, 15a ausgebildet. Beispielhaft ist in dem ersten Raum 10 der erste Raumregler 15, das erste Heizungsventil 16 und der erste Wärmeübertrager 17 ausgebildet. Beispielhaft ist in dem zweiten Raum 10a der zweite Raumregler 15a, das zweite Heizungsventil 16a und der zweite Wärmeübertrager 17a ausgebildet. Der erste Raum 10 entspricht n=1 und der zweite Raum 10a entspricht n=2. Das Verfahren kann bei einem Gebäude mit beliebig vielen Räumen angewendet werden.

Gemäß einer vorteilhaften Weiterbildung ist der erste Raumregler 15 und das erste Heizungsventil 16 als ein Bauteil ausgebildet. Gemäß einer vorteilhaften Weiterbildung ist der zweite Raumregler 15a und das zweite Heizungsventil 16a als ein Bauteil ausgebildet. Gemäß einer vorteilhaften Weiterbildung ist der n-te Raumregler und das n-te Heizungsventil als ein Bauteil ausgebildet.

Der erste Raumregler 15, steuert das erste und/oder die ersten Heizungsventile 16 des ersten Raums 10. Der zweite Raumregler 15a, steuert das zweite Heizungsventile 16a des zweiten Raums 10a. Vorzugsweise erfolgt die Steuerung des Heizungsventils 16, 16a mittels der Vorgabe oder Bereitstellung einer Ventil-Sollposition, welche insbesondere hinterlegt wird. Unter Bereitstellung wird hierbei verstanden, dass die hinterlegte Ventil-Sollposition an das Heizungsventil 16, 16a gesendet, insbesondere übertragen, wird oder dem Heizungsventil 16, 16a zum Abruf bereitgestellt wird.

Das Senden oder Übertragen erfolgt hierbei mittels eines Kommunikationsmittels und einer Kommunikationsverbindung. Auch kann die Ventil-Sollposition von dem Heizungsventil 16, 16a abgerufen werden. Vorzugsweise wird die Ventil-Sollposition, nachdem sie empfangen oder abgerufen wurde, in einem Speicher hinterlegt.

Die Wärmeübertrager 16, 16a und der Wärmeerzeugereinheit 5 sind über einen Heizkreis 4 fluidtechnisch verbunden. In dem Heizkreis 4 zirkuliert ein fluider Wärmeträger, welcher von dem Wärmeerzeugereinheit 5 erwärmt wird. Eine Pumpeneinheit 6 in dem Heizkreis 4 sorgt für das Zirkulieren des Wärmeträgers.

Die Zentralsteuerung 5 und die Raumregler 15, 15a sind mittels Kommunikationsverbindungen miteinander verbunden. Die Kommunikation läuft drahtgebunden, insbesondere mittels eines Bussystems, Modbus, Powerline, M-Bus, Ethernet, EIB, CAN, KNX, EMS, OpenTherm oder drahtlos, vorzugsweise Bluetooth, NFC, RFID, ANT+, Dash7, GPRS, EDGE, UMTS, 5G, LTE, WIMAX, Zigbee, Thread, Matter, Z-Wave, 868 MHz oder WIFI ab. Die Zentralsteuerung 5 und die Raumregler 15, 15a weisen jeweils vorzugsweise ein Kommunikationsmittel zur Herstellung der Kommunikationsverbindung auf.

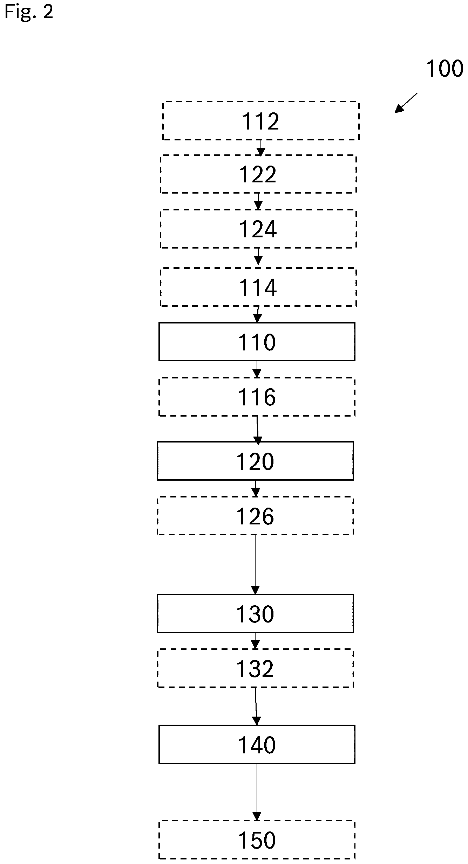

In Figur 2 ist ein erfindungsgemäße Verfahren 100 dargestellt.

In einem Verfahrensschritt 110 des Verfahrens 100 erfolgt das Ermitteln einer ersten zentralen Ventil-Sollposition für ein erstes Heizungsventil 15 oder mehrere erste Heizungsventile in einem ersten Raum 10. Das Ermitteln der ersten zentralen Ventil-Sollposition erfolgt mittels der Vorlauf-Solltemperatur und/oder Vorlauf-Isttemperatur und/oder Raum-Isttemperatur und/oder der Raum-Solltemperatur und/oder der Volumenströme und/oder dem Status der Wärmeerzeugereinheit und/oder dem Wärmebedarf und/oder dem Wärmpotential und/oder der Raum-Solltemperatur und/oder der Raum-Isttemperatur.

Vorzugsweise wird die erste zentrale Ventil-Sollposition sowie weitere, insbesondere die zweite, zentrale Ventil-Sollpositionen in Abhängigkeit der Außentemperatur und/oder der Vorlauf-Isttemperatur und/oder der Raum-Isttemperatur und/oder der Ventil-Istposition und/oder einem zuvor ermittelten Parameter (P) ermittelt. Insbesondere wird ein Parameter (P) nach

$$P_{(n)} = (VentilPos_{Ist(n)} * (T_{Vorlauf\text{-}Ist(n)} - T_{Raum\text{-}Ist(n)})) / (T_{Raum\text{-}Ist(n)} - T_{Außen})$$

mit

n = Raum und/oder Raumregler
$T_{Raum\text{-}Ist}$ = Raum-Isttemperatur
$T_{Außen}$ = Außentemperatur
$T_{Vorlauf\text{-}Ist}$ = Vorlauf-Isttemperatur

$VentilPos_{Ist(n)}$ = Ventil-Istposition, insbesondere als relativer /Prozentualwert

bestimmt. Vorzugsweise wird der Parameter P aus den Ist-Werten bestimmt. Insbesondere wird Parameter P mittels Werte ermittelt, welche insbesondere zur gleichen Zeit, ermittelt, insbesondere gemessen werden.

Vorzugsweise wird davon ausgegangen, dass die Ventil-Istposition der hinterlegten Ventil-Sollposition entspricht. Die Ventil-Istposition ist die Position, welche das Heizungsventil aktuell einnimmt.

Vorzugsweise wird der Parameter P für jeden Raumregler n und/oder Raum n ermittelt. Insbesondere wird ein erster Parameter $P_1$ für den ersten Raum und/oder den ersten Raumregler und ein zweiter Parameter $P_2$ für den zweiten Raum und/oder zweiten Raumregler usw. ermittelt. $P_n$ wird für den n-ten Raum und/oder n-ten Raumregler ermittelt.

Bei der Ventil-Istposition handelt es sich insbesondere um die aktuell vorliegenden Ventilposition, welche zum Zeitpunkt der Ermittlung der weiteren Ist-Werte vorlag. Handelt es sich um eine historische Ventil-Sollposition wurde diese in der Vergangenheit ermittelt. Vorzugsweise erfolgt das Ermitteln der Ventil-Istposition im Wesentlichen gleichzeitig, also im gleichen Zeitraum, wie das Ermitteln der Raum-Isttemperatur, der Außentemperatur und der Vorlauf-Isttemperatur. Gemäß einer Weiterbildung entspricht die Ventil-Istposition der Ventil-Sollposition.

In einem weiteren Schritt wird mittels dem ermittelten Parameter P die Vorlaufsolltemperatur ermittelt werden.

$$T_{Vorlauf\text{-}Soll(n)} = P_{(n)} * ((T_{Raum\text{-}Soll(n)} - T_{Außen}) / VentilPos_{Ziel(n)}$$

mit

$T_{Vorlauf\text{-}Soll(n)}$ = Vorlauf-Solltemperatur
$T_{Raum\text{-}Soll}$ = Raum-Solltemperatur
$T_{Außen}$ = Außentemperatur
$VentilPos_{Ziel(n)}$ = Ventil-Zielposition entspricht der Position, welche die Heizungsventile als Zielwert anstreben sollten. Die Ventil-Zielposition ist insbesondere bei als Wärmepumpe ausgebildeten Wärmeerzeuger zwischen 80 bis 100%, vorzugsweise größer 95%, beispielsweise 100% und bei Brennwertgeräten 20 bis 40%, insbesondere 25% bis 35%, beispielsweise 30%. Die $VentilPos_{Ziel(n)}$ wird vorgegeben.

Die jeweilige n-te zentrale Ventil-Sollposition $VentilPos_{zentral}$ für jeden Raum n wird mittels der folgenden Formel ermittelt.

$$VentilPos_{Zentral(n)} = (T_{Vorlauf\text{-}Soll(n)} - T_{Raum\text{-}Ist(n)}) / (max(T_{Vorlauf\text{-}Soll(n)}) - T_{Raum\text{-}Ist(n)})$$

mit

n = Nummerierung der Räume, n ist eine natürliche Zahl
$T_{Vorlauf\text{-}Soll(n)}$ = Vorlauf-Solltemperatur für den Raum mit der Nummer n
$T_{Raum\text{-}Ist(n)}$ = aktuelle Raum-Isttemperatur des Raumes mit der Nummer n
$max(T_{Vorlauf\text{-}Soll(n)})$ = maximale Vorlauf-Solltemperatur ermittelt aus den Vorlauf-Solltemperaturen der Räume 1 bis n, vorzugweise gibt es nur eine zentrale Vorlauf-Solltemperatur, die für alle Räume gilt,

Oder auch über

$$VentilPos_{Zentral(n)} = (T_{Vorlauf\text{-}Soll(n)} - T_{Raum\text{-}Ist(n)}) / (T_{Vorlauf\text{-}Ist(n)} - T_{Raum\text{-}Ist(n)})$$

mit

n = Nummerierung der Räume, n ist eine natürliche Zahl
$T_{Vorlauf\text{-}Soll(n)}$ = Vorlaufsolltemperatur für den Raum mit der Nummer n
$T_{Raum\text{-}Ist(n)}$ = aktuelle Raumtemperatur des Raumes mit der Nummer n
$T_{Vorlaufl\text{-}Ist(n)}$ = aktuelle Vorlauftemperatur des Raumes mit der Nummer n

Vorzugsweise wird für jeden Raum n und/oder Raumregler eine zentrale Ventil-Sollposition $VentilPos_{Zentral(n)}$ ermittelt. Vorzugsweise wird entsprechend für jeden Raum und/oder Raumregler ein eigner Parameter P ermittelt.

Vorzugsweise wird der Parameter P in einem vorgelagerten optionalen Verfahrensschritt 114 ermittelt.

In einem optionalen vorgelagerten Verfahrensschritt 112 erfolgt das Ermitteln der Vorlauf-Solltemperatur und/oder Vorlauf-Isttemperatur und/oder der Volumenströme und/oder dem Status der Wärmeerzeugereinheit und/oder dem Wärmebedarf und/oder dem Wärmpotential.

Das Ermitteln der, insbesondere ersten, Raum-Isttemperatur erfolgt in Verfahrensschritt 122 und das Ermitteln der, insbesondere ersten, Raum-Solltemperatur erfolgt in Verfahrensschritt 124.

Vorzugsweise wird die erste zentrale Ventil-Sollposition mittels einer Zentralsteuerung 5 und/oder einem Raumregler 15, 15a, insbesondere dem ersten Raumregler 15 durchgeführt.

In einem weiteren optionalen Verfahrensschritt 116, der sich an den Verfahrensschritt 110 anschließt, erfolgt das Bereitstellen der ermittelten ersten zentralen Ventil-Sollposition. Dieser Verfahrensschritt entfällt, wenn der im folgenden erläuterte Verfahrensschritt 130 von der Zentralsteuerung 5 ausgeführt wird.

In einem weiteren Verfahrensschritt 120 erfolgt das Ermitteln einer ersten lokalen Ventil-Sollposition durch den ersten Raumregler 15. Die erste lokale Ventil-Sollpositionen wird in Abhängigkeit einer ermittelten Raum-Solltemperatur und einer ermittelten Raum-Isttemperatur ermittelt.

Liegt noch keine Ventil-Sollposition, wird die ermittelte lokale Ventil-Sollposition verwendet und bildet die Ventil-Sollposition. Diese ist insbesondere bei der Erstinbetriebnahme der der Fall. Auch im Fehlerfall wird die ermittelte lokale Ventil-Sollposition hinterlegt und bildet die Ventil-Sollposition.

Liegt die Raum-Isttemperatur unterhalb des Raum-Solltemperatur wird eine lokale Ventil-Sollposition ermittelt, welche identisch als Ventil-Sollposition bereitgestellt, bewirkt, dass die Durchgangsöffnung des Heizungsventil zusätzlich geöffnet wird, um dem Raum mehr Wärme zuzuführen.

Vorzugsweise sind dem Verfahrensschritt 120 weitere optionale Verfahrensschritte 122, 124 vorgelagert, nämlich das Ermitteln 124 der Raum-Solltemperatur und das Ermitteln 122 der Raum-Isttemperatur. Die Reihenfolge der Verfahrensschritte 122 und 14 können untereinander beliebig getauscht werden.

Das Ermitteln 122 der Raum-Isttemperatur umfasst insbesondere ein Erfassen der Lufttemperatur in dem ersten Raum 10. Das Ermitteln 122 umfasst auch ein Erfassen mittels eines Temperatursensors, der insbesondere Teil des ersten Raumreglers 15 oder eines Raumreglers in dem ersten Raum 10 ist. Das Ermitteln muss nicht zwangsläufig ein Messen umfassen. Die Raum-Isttemperatur kann auch mittels Empfangens oder Abrufen ermittelt werden.

Das Ermitteln 124 der Raum-Solltemperatur umfasst insbesondere das Auslesen eines Speichers, in dem die Raum-Solltemperatur gespeichert ist, oder das Abfragen der Raumsolltemperatur eines Benutzers. Die n-te, insbesondere die erste, Raum-Solltemperatur ist die von einem Benutzer gewünschte Temperatur in dem n-ten, insbesondere die ersten, Raum. Die n-te, insbesondere die erste, Raum-Solltemperatur kann insbesondere mittels des n-ten, insbesondere ersten, Raumregler 15 eingestellt werden.

Gemäß einer Weiterbildung weist der erste Raumregler 15 Eingabemittel und/oder ein Anzeigemittel auf. Die Raum-Solltemperatur kann auch mittels Empfangens oder Abrufen ermittelt werden. So kann die Raum-Solltemperatur auch in einem anderen Raumregler oder einem Zentralen Bedieneinheit oder einer App eingestellt werden.

Vorzugsweise wird die Raum-Isttemperatur und/oder die Raum-Solltemperatur bereitgestellt. Insbesondere wird die Raum-Isttemperatur und/oder die Raum-Solltemperatur zur Ermittlung des Parameters P in Verfahrensschritt 114 und oder für die Ermittlung der zentralen Ventil-Sollposition in Verfahrensschritt 110 bereitgestellt.

Die Verfahrensschrittgruppen 11x und 12x können nacheinander oder parallel ablaufen.

In einem weiteren optionalen Verfahrensschritt 126 erfolgt das Bereitstellen der ermittelten ersten lokalen Ventil-Sollposition. Das Bereitstellen 126 umfasst das Senden aber auch ein zum Abruf zur Verfügung stellen. Das Bereitstellen erfolgt durch den ersten Raumregler 15, der die erste lokale Ventil-Sollposition ermittelt hat.

In einem weiteren Verfahrensschritt 130 erfolgt das Vergleichen der ermittelten ersten zentralen Ventil-Sollposition mit der ermittelten ersten lokalen Ventil-Sollposition. Vorzugsweise wird vor dem Verfahrensschritt 130 ein weiterer Verfahrensschritt 132 ausgeführt, in dem die erste zentrale Ventil-Sollposition und/oder die ermittelten ersten lokale Ventil-Sollposition abgerufen wird.

Ergibt das Vergleichen 130 eine Abweichung, die größer oder gleich einem definierten Wert ist, so wird Verfahrensschritt 140 ausgeführt.

In Verfahrensschritt 140 wird die erste Ventil-Sollposition in Abhängigkeit von der Abweichung und/oder einer ermittelten, insbesondere der ersten, zentralen Ventil-Sollposition verändert. Vorzugsweise wird hierbei dem ersten Raumregler 15 ein Steuersignalbereitgestellt, welches bewirkt, dass die ermittelte erste lokale und/oder die Ventil-Sollposition überschrieben und/oder verändert wird.

Das Verfahren 1000 wird beliebig oft wiederholt. Das Wiederholen kann Trigger basiert oder nach einem Zeitwert erfolgen.

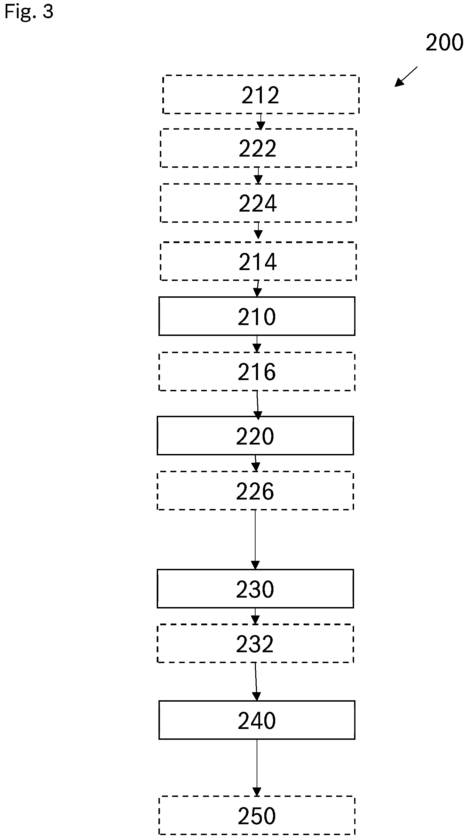

In Figur 3 ist das Verfahren 200 zur Ermittlung der zweiten Ventil-Sollposition dargestellt.

Die Verfahrensschritte 2xx und Reihenfolge entspricht im Wesentlichen den Verfahrensschritten 1xx. Während mit den Verfahrensschritten 1xx eine Ventil-Sollposition für ein erstes Heizungsventil 16 ermittelt, insbesondere geändert wird, wird mit den Verfahrensschritten 2xx die Ventil-Sollposition für ein zweites Heizungsventil 16a ermittelt, insbesondere geändert.

Das Verfahren 100 kann entsprechend für die Ermittlung und Änderung n-ter Ventil-Sollpositionen, insbesondere 3xx (n=3), 4xx (n=4) usw., portiert werden. Die einzelnen Verfahrensschritte 1xx und 2xx können nacheinander, ineinander verzahnt und/oder parallel durchgeführt werden.

Das Verfahren 200 ist im Wesentlichen identisch zum Verfahren 100. Es werden lediglich die für die Ermittlung der ersten Ventil-Sollposition spezifischen ersten Komponenten und Verfahrensschrittergebnisse durch die zweiten Komponenten und Verfahrensschrittergebnisse ersetzt. Gleiches gilt für das Ermitteln der n-ten Ventil-Sollposition. Das gesamte Verfahren oder einzelne Verfahrensschritte können beliebig vor, danach, dazwischen oder gleichzeitig zu den ersten Verfahrensschritten angeordnet und ausgeführt werden. Gemäß einer vorteilhaften Weiterbildung kann das Verfahren auf die Ermittlung eines n-ten, insbesondere dritten, vierten usw. Ventil-Sollposition erweitert werden. Hierzu muss lediglich die Komponenten und Verfahrensschrittergebnisse angepasst werden.

Gemäß einer Weiterbildung erfolgt das Ermitteln 210 einer zweiten zentralen Ventil-Sollposition entsprechend den Ausführungen in Verfahrensschritt 110.

Vorzugsweise wird für jede Heizungsventil 17, 17a und/oder Raumregler 15, 15 und/oder Raum eine eigene zentrale Ventil-Sollposition ermittelt. Ferner wird in Verfahrensschritt 220 eine zweite lokale Ventil-Sollposition ermittelt. Diese wird durch den zweiten Raumregler 15a ermittelt. Die zweite Ventil-Sollpositionen wird in Abhängigkeit einer ermittelten Raum-Solltemperatur für den zweiten Raum und einer ermittelten Raum-Isttemperatur des zweiten Raums ermittelt.

Die Verfahrensschritte 222, 224 und 226 sind identisch zu den Verfahrensschritte 122, 124, 126, jedoch bezogen auf den zweiten Raumregler 15a.

In einem weiteren Verfahrensschritt 230 erfolgt das Vergleichen der ermittelten zweiten zentralen Ventil-Sollposition mit der ermittelten zweiten lokalen Ventil-Sollposition. Der Verfahrensschritt 232 wird die zweite zentrale Ventil-Sollposition und/oder die ermittelten zweite lokale Ventil-Sollposition abgerufen wird.

Ergibt das Vergleichen 230 eine Abweichung, die größer oder gleich einem definierten Wert ist, so wird Verfahrensschritt 240 ausgeführt.

In Verfahrensschritt 240 wird die zweite Ventil-Sollposition in Abhängigkeit von der Abweichung und/oder einer ermittelten, insbesondere der zweiten, zentralen Ventil-Sollposition verändert. Vorzugsweise wird hierbei dem zweiten Raumregler 15a ein Steuersignal bereitgestellt, welches bewirkt, dass die zweite lokale und/oder die Ventil-Sollposition überschrieben oder verändert wird.

Vorzugsweise sind die Raumregler 15, 15a als P-Regler, I-Regler, PD-Regler, PID-Regler oder PI-Regler ausgeführt und/oder weisen einen solchen Regler auf. Das Verändern 140, 240 erfolgt durch ein Ändern, insbesondere Vorgeben einer Änderung des proportionalen Anteils (P) und/oder des integralen Anteils(I) und/oder des differenzialen Anteils (D) erfolgt, und dass insbesondere des proportionalen Anteils (P) und/oder des integralen Anteils(I) und/oder des differenzialen Anteils (D) und/oder Offsets.

Gemäß einer Weiterbildung der Erfindung sind die ermittelten zentralen Ventil-Sollpositionen, also die erste und die zweite ermittelte zentrale Ventil-Sollposition identisch.

Gemäß einer Weiterbildung der Erfindung wird beim Vergleichen 130, 230 die lokale Ventil-Sollposition von weiteren Raumreglern 15, 15a verwendet.

In dem Verfahrensschritt 150, bzw. 250 erfolgt das Ansteuern des Heizungsventils 16, 16a in Abhängigkeit von der Ventil-Sollposition. Das Heizungsventil stellt in Abhängigkeit von der Ventil-Sollposition die Ventil-Istposition ein.

Vorzugsweise kann das Verfahren um beliebig viele Räume und Raumregler erweitert werden. Das Verfahren 100 kann für beliebig viele Raumregler und Heizungsventile verwendet werden. Die Ausführungen zu dem ersten Raumregler und die Verfahrensschritt 110 bis 150 müssen lediglich für einen zweiten oder dritten usw. angepasst werden.

Gemäß einer vorteilhaften Weiterbildung wird als Ventil-Sollposition die ermittelte lokale Ventil-Sollposition verwendet, wenn ein Fehler erzeugt wird, oder wenn keine zentrale Ventil-Sollposition ermittelt oder bereitgestellt wird.

Die n-te Ventil-Sollposition, die n-te lokale Ventil-Sollposition und die n-te zentrale Ventil-Sollposition stellen unterschiedlichen Variablen dar, die jedoch unter besonderen Bedingungen den gleichen Wert aufweisen, und/oder aufeinander abgebildet werden.

**Patentansprüche**

1. Verfahren (100) zum Betrieb eines Heizungssystems (1) zum Beheizen von mindestens einem Raum (10, 10a), wobei Wärme, insbesondere mittels einer Wärmeerzeugereinheit (3), zentral bereitgestellt wird und mittels eines fluiden Wärmeträgers, insbesondere Wasser, verteilt wird, wobei die Wärmezufuhr zu einem ersten Raum (10) von zumindest einem ersten Raumregler (15) mittels mindestens einer ersten Ventil-Sollposition an mindestens ein Heizungsventil (16, 16a) vorgegeben wird, wobei das Verfahren (100) die folgenden Schritte umfasst:

   • Ermitteln (110) einer ersten zentralen Ventil-Sollposition,
   • Ermitteln (120) einer ersten lokalen Ventil-Sollposition durch den ersten Raumregler,
   • Bereitstellen (126) der ermittelten ersten lokalen Ventil-Sollposition, insbesondere durch den ersten Raumregler (15), und/oder der ermittelten ersten zentralen Ventil-Sollposition,

• Vergleichen (130) der ermittelten ersten zentralen Ventil-Sollposition mit der ermittelten ersten lokalen Ventil-Sollposition, wobei bei einer Abweichung größer oder gleich einem definierten Wert die erste Ventil-Sollposition in Abhängigkeit von der Abweichung und/oder einer ermittelten, insbesondere der ersten, zentralen Ventil-Sollposition verändert wird (140).

**2.** Verfahren (100) nach dem vorhergehenden Anspruch, **dadurch gekennzeichnet, dass** die Wärmezufuhr zu einem zweiten Raum (10a) von zumindest einem zweiten Raumregler (15a) mittels mindestens einer zweiten Ventil-Sollposition vorgegeben wird, aufweisend die Schritte:

• Ermitteln (210) einer zweiten zentralen Ventil-Sollposition;
• Ermitteln (220) einer zweiten lokalen Ventil-Sollposition durch den zweiten Raumregler (15a),
• Bereitstellen (226) der ermittelten zweiten lokalen Ventil-Sollposition, insbesondere durch den zweiten Raumregler (15a), und/oder der ermittelten zweiten zentralen Ventil-Sollposition,
• Vergleichen (230) der ermittelten zweiten zentralen Ventil-Sollposition mit der ermittelten zweiten lokalen Ventil-Sollposition, wobei bei einer Abweichung größer oder gleich einem definierten Wert die zweite Ventil-Sollposition in Abhängigkeit von der Abweichung und/oder einer der ermittelten, insbesondere der zweiten, zentralen Ventil-Sollposition verändert wird (240).

**3.** Verfahren (100) nach dem vorhergehenden Anspruch, **dadurch gekennzeichnet, dass** bei der Inbetriebnahme oder im Fehlerfall die ermittelte lokale Ventil-Sollposition als Ventil-Sollposition hinterlegt wird.

**4.** Verfahren (100) nach dem vorhergehenden Anspruch, **dadurch gekennzeichnet, dass** das Verändern der Ventil-Sollposition zusätzlich in Abhängigkeit von zumindest einer weiteren ermittelten Abweichung, insbesondere der für einen weiteren Raum ermittelten Abweichung, durchgeführt wird.

**5.** Verfahren (100) nach einem der vorhergehenden Ansprüche, **dadurch gekennzeichnet, dass** zumindest eine, insbesondere alle, lokalen Ventil-Sollpositionen in Abhängigkeit einer ermittelten Raum-Solltemperatur und einer ermittelten Raum-Isttemperatur ermittelt werden.

**6.** Verfahren (100) nach einem der vorhergehenden Ansprüche, **dadurch gekennzeichnet, dass** die Zentralsteuerung (5) und mindestens ein Raumregler (15, 15a) miteinander kommunizieren, und dass die zentralen Ventil-Sollpositionen von der Zentralsteuerung (5) und/oder einem der Raumregler (15, 15a) bereitgestellt wird, und/oder dass das Vergleichen von der Zentralsteuerung (5) und/oder einem der Raumregler (15, 15a) durchgeführt wird, und dass das Ändern (140, 240) der einzelnen Ventil-Sollpositionen, insbesondere der ersten und/oder zweiten Ventil-Sollposition mittels mindestens einem Steuersignal und/oder mindestens einer Vorgabe und/oder durch ein Aufprägen erfolgt.

**7.** Verfahren (100) nach einem der vorhergehenden Ansprüche, **dadurch gekennzeichnet, dass** zumindest einer, insbesondere der erste und/oder der zweite, vorzugsweise wenigstens zwei, beispielsweise alle, Raumregler (15, 15a) einen P-Regler, I-Regler, PD-Regler, PID-Regler oder PI-Regler zur Ermittlung der Ventil-Sollposition aufweisen.

**8.** Verfahren (100) nach einem der vorhergehenden Ansprüche, **dadurch gekennzeichnet, dass** das Ändern (140, 240) der Ventil-Sollposition durch Ändern, insbesondere durch eine Vorgabe einer Änderung, des proportional Anteils (P) und/oder des integralen Anteils(I) und/oder des differenzialen Anteils (D) und/oder eines Offsets erfolgt.

**9.** Verfahren (100) nach einem der vorhergehenden Ansprüche, **dadurch gekennzeichnet, dass** die erste zentrale Ventil-Sollpositionen und/oder zweite zentrale Ventil-Sollpositionen mittels der Außentemperatur und/oder der Vorlauf-Solltemperatur und/oder der Vorlauf-Isttemperatur und/oder der Raum-Isttemperatur und/oder der Ventil-Istposition und/oder einem zuvor ermittelten Parameter (P) ermittelt wird.

**10.** Zentralsteuerung (5), welche ausgebildet ist das Verfahren nach einem der vorhergehenden Ansprüche zumindest teilweise auszuführen, und wobei die Zentralsteuerung (5) ein Kommunikationsmittel aufweist, welches eingerichtet und ausgebildet ist, mit den Raumreglern (15, 15a) und/oder der Wärmeerzeugereinheit (3) zu kommunizieren.

**11.** Heizungssystem (1) mit einer Zentralsteuerung (5) nach dem vorhergehenden Anspruch, mit einem Wärmeerzeugereinheit (5), mit mindestens einem Raumregler (15, 15a), der mindestens ein Heizungsventil (16, 16a) steuert, wobei das Heizungssystem (1) ausgebildet und eingerichtet ist, das Verfahren (100) auszuführen.

Fig. 1

Fig. 2

100

```
┌ ─ ─ ─ ─ ─ ─ ─ ─ ─ ┐
        112
└ ─ ─ ─ ─│─ ─ ─ ─ ─ ┘
         ▼
┌ ─ ─ ─ ─ ─ ─ ─ ─ ─ ┐
        122
└ ─ ─ ─ ─│─ ─ ─ ─ ─ ┘
         ▼
┌ ─ ─ ─ ─ ─ ─ ─ ─ ─ ┐
        124
└ ─ ─ ─ ─│─ ─ ─ ─ ─ ┘
         ▼
┌ ─ ─ ─ ─ ─ ─ ─ ─ ─ ┐
        114
└ ─ ─ ─ ─│─ ─ ─ ─ ─ ┘
         ▼
┌───────────────────┐
│        110        │
└────────│──────────┘
         ▼
┌ ─ ─ ─ ─ ─ ─ ─ ─ ─ ┐
        116
└ ─ ─ ─ ─│─ ─ ─ ─ ─ ┘
         ▼
┌───────────────────┐
│        120        │
└────────│──────────┘
         ▼
┌ ─ ─ ─ ─ ─ ─ ─ ─ ─ ┐
        126
└ ─ ─ ─ ─│─ ─ ─ ─ ─ ┘
         │
         ▼
┌───────────────────┐
│        130        │
└────────│──────────┘
         ▼
┌ ─ ─ ─ ─ ─ ─ ─ ─ ─ ┐
        132
└ ─ ─ ─ ─│─ ─ ─ ─ ─ ┘
         ▼
┌───────────────────┐
│        140        │
└────────│──────────┘
         ▼
┌ ─ ─ ─ ─ ─ ─ ─ ─ ─ ┐
        150
└ ─ ─ ─ ─ ─ ─ ─ ─ ─ ┘
```

Fig. 3

200

EP 4 607 098 A1

Europäisches Patentamt
European Patent Office
Office européen des brevets

**EUROPÄISCHER RECHERCHENBERICHT**

Nummer der Anmeldung

EP 25 15 4995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 593 055 B1 (VIESSMANN CLIMATE SOLUTIONS SE [DE]) 12. Mai 2021 (2021-05-12) * Absätze [0019], [0020] - [0029], [0045] - [0049]; Abbildungen 1-5 * ----- | 1-11 | INV. F24D19/10 F24H15/128 F24H15/254 F24H15/31 F24H15/414 |
| A | EP 3 473 939 B1 (VIESSMANN CLIMATE SOLUTIONS SE [DE]) 15. September 2021 (2021-09-15) * das ganze Dokument * ----- | 1-11 | F24H15/421 F24H15/443 G05D23/19 |
| A | EP 3 584 504 A1 (VAILLANT GMBH [DE]) 25. Dezember 2019 (2019-12-25) * das ganze Dokument * ----- | 1-11 | |
| A | EP 3 650 761 A1 (SIEMENS SCHWEIZ AG [CH]) 13. Mai 2020 (2020-05-13) * das ganze Dokument * ----- | 1-11 | |

RECHERCHIERTE SACHGEBIETE (IPC)

F24D
G05D
F24H

Der vorliegende Recherchenbericht wurde für alle Patentansprüche erstellt

| Recherchenort | Abschlußdatum der Recherche | Prüfer |
|---|---|---|
| München | 26. Juni 2025 | García Moncayo, O |

## ANHANG ZUM EUROPÄISCHEN RECHERCHENBERICHT
## ÜBER DIE EUROPÄISCHE PATENTANMELDUNG NR.

EP 25 15 4995

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2025

| Im Recherchenbericht angeführtes Patentdokument | | Datum der Veröffentlichung | Mitglied(er) der Patentfamilie | | Datum der Veröffentlichung |
|---|---|---|---|---|---|
| EP 3593055 | B1 | 12-05-2021 | DE 102017203850 | A1 | 13-09-2018 |
| | | | EP 3593055 | A1 | 15-01-2020 |
| | | | WO 2018162679 | A1 | 13-09-2018 |
| EP 3473939 | B1 | 15-09-2021 | DE 102017218139 | A1 | 11-04-2019 |
| | | | EP 3473939 | A1 | 24-04-2019 |
| EP 3584504 | A1 | 25-12-2019 | DE 102018113969 | A1 | 12-12-2019 |
| | | | EP 3584504 | A1 | 25-12-2019 |
| EP 3650761 | A1 | 13-05-2020 | KEINE | | |

EPO FORM P0461

Für nähere Einzelheiten zu diesem Anhang : siehe Amtsblatt des Europäischen Patentamts, Nr.12/82